# EUROPEAN PATENT APPLICATION

(11) **EP 1 571 871 A1**
(43) Date of publication of application: **07.09.2005**
(21) Application number: 03777355.3
(22) Date of filing: 08.12.2003
(51) Int. Cl.: H04R 1/02, B27N 1/02, C08L 1/00, C08L 101/00

(54) **SPEAKER CABINET**

(30) Priority: 10.12.2002 JP 2002357492
(71) Applicant: OG Corporation, Osaka 532-8555 (JP); MATSUSHITA ELECTRIC INDUSTRIAL CO., LTD., Osaka 571-8501 (JP)
(72) Inventor: ISHIDA, Hiroyuki, c/o OG Corporation, Osaka, Osaka 532-8555 (JP); TAKAHASHI, Ken, c/o OG Corporation, Osaka-Shi, Osaka 532-8555 (JP); SUZUKI, Takashi, Taki-gun, Mie 515-0321 (JP); OMORI, Tatsuya, Uji-Shi, Kyoto 611-0021 (JP); MIZONE, Shinya, Tsu-shi, Mie 514-0061 (JP)
(74) Representative: White, Duncan Rohan
(86) International application number: PCT/JP2003/015681
(87) International publication number: WO 2004/054315

(57) **Abstract**

A smaller-sized speaker cabinet developed in this invention is made of a mixture that is composed of a woody cellulose powder of proper physical properties and a synthetic resin blended with this powder. The resin is a non-chlorinated resin, and the cellulose powder consists of particles whose diameters are included in a range from about 5 µ*m* to 500 µ*m*. The cellulose powder is surface-treated to increase affinity for the resin, so that efficient manufacture of the cabinets of improved acoustic performance is now possible.

## Description

### INDUSTRIAL FIELD OF THE INVENTION

The present invention relates to a speaker cabinet that is designed to enclose the rear and side faces of a speaker body in order to raise its acoustic radiation efficiency.

### BACKGROUND OF THE INVENTION

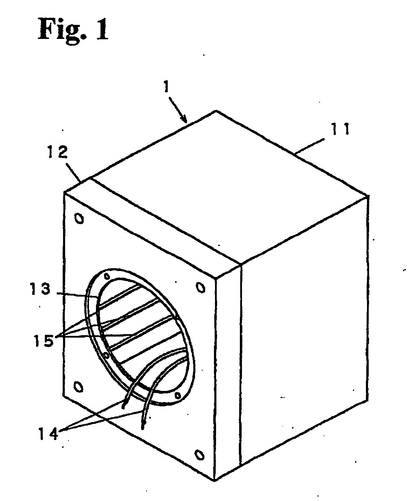

Every speaker has been accommodated in a cabinet, as widely known in the art. In case of large-sized high-grade speaker cabinets, they are usually made of woody materials. In case of other speaker cabinets of relatively smaller sizes, variety of their configuration as well as easiness to mold them are important factors. Therefore, either pieces of synthetic resins mixed or not-mixed with any fillers, or molded metal pieces, are used as such smaller speaker cabinets. An example of such molded smaller-sized cabinets is shown in Fig. 1 that is an illustration of the first embodiment of present invention. This cabinet is usually formed as a box (1), that has in one of its faces a hole (13) through which a speaker held in this box does face outwards. This face (12) having the hole formed therein is commonly called a frontal plate (or baffle plate), and in a few cases, it is made integral with another part (11) of this box. In most cases, such smaller-sized speaker cabinets have each the frontal plate (12) manufactured as a discrete member in each cabinet. In a proper region that may be a back face (not shown) of the speaker cabinet box, an input terrninal (not shown) is disposed to receive a signal current from an amplifier.

Acoustic waves radiated forwards from a speaker not enclosed in any cabinet will vary their phase every moment and continuously, but opposite to that of synchronous acoustic waves radiated backwards from this speaker. Due to this phenomenon, those forward and backward waves will naturally tend to partially cancel one another and lower the radiation efficiency. Therefore, speakers have each been installed in the hole (13) of a closed type cabinet so that a diaphragm of that speaker might keep the interior thereof isolated from the exterior. In the so-called "pass-ref" type cabinets, an acoustic circuit comprising a diaphragm, ports and the like will acoustically separate the interior from exterior. Mutual cancellation of acoustic waves opposed in direction is avoided in these ways, lest radiation efficiency should be impaired.

In another case wherein the speaker is placed in a cabinet, not only the energy of backward acoustic waves from this speaker, but also a vibration energy transmitted from its frame will force the cabinet walls to vibrate and produce extra acoustic waves. Such extra waves from those walls will be sensed as a non-linear and extraordinary distortion in regenerated sounds of an impaired quality. Frequencies and intensities of the distorted sound will vary depending on the shape, structure and constructive material of the cabinet. Physical properties such as density, Young's modulus, tan δ (viz., mechanical internal loss) and the like are particularly important to the material of cabinets. These factors should be optimized to diminish vibration of their walls being designed.

An object of the present invention is to resolve these problems by means of an improved material of speaker cabinets. Certain powdery cellulose substances of excellent physical properties will be employed herein to develop a novel mixture. Those cellulose substances may be blended with certain synthetic resins to enable an efficient and inexpensive manufacture of smaller-sized speaker cabinets of a much better acoustic performance.

### DISCLOSURE OF THE INVENTION

In order to achieve the object noted above, the present invention will provide a speaker cabinet composed of a mixture of a non-chlorinated resin and a cellulose powder, wherein the powder consists of particles whose diameters are included in a range from about 5 µ*m* to 500 µ*m*.

This mixture may be molded to form the speaker cabinet, and the diameter range is more preferably from about 4 µ*m* to about 400 µ*m.* The non-chlorinated resin may either be a thermosetting resin, or a thermoplastic resin that is typically a polyolefin resin, a polystyrene resin, a polyester resin or the like. Among these resins, a polypropylene resin is most preferable because of its higher mechanical strength, its easiness to process and its cleanliness unlikely to cause any environmental pollution when discarded. The cellulose powder may be minute woody particles, minute paper particles, powdery pulp, powdery cotton linter or the like. Surface treatment of these cellulose particles is desirable in order to give their surfaces an improved affinity to the resins, possibly forming chemical bonds with the latter. Content by weight of the cellulose powder in the mixture may preferably be about 30 % - 70 %. An excessive content of cellulose powder will lower rigidity of the molded article, rendering it so fragile as inadequate in some cases.

The surface treatment of cellulose powder necessitated herein to improve its affinity to resins may for example be esterification, that will be done using a polybasic acid anhydride such as maleic anhydride. A relatively small amount of an organic peroxide such as benzoyl peroxide will contribute to further raise the affinity of esterified cellulose powder for synthetic resins. In this case, such a cellulose powder having an excellent affinity for the resins can be blended therewith at any desired high rate within the range noted above, without impairing fluidity of a resultant mixture. Preparation of the mixture capable of being smoothly molded is thus made easier. Even if a polyolefin is employed as the resin, surfaces of resultant products may simply be ground in a mechanical manner so as to enable them to be painted with any colorant and/or bonded to any foreign articles. It is a matter of course that any usual plasma spray coating or primer coating may be done to further improve the bond strength of final products and/or stability of their coated membranes.

Among the thermoplastic resins and thermosetting resins as the non-chlorinated resins that are blended with a cellulose powder in the invention, polyolefin resins are the most preferable materials. In particular, polypropylenes are best, owing to their easiness to mold, better physical properties, readiness to recycle, easiness of disposal treatments, cheapness and the like features. Injection molding is the typical technique of molding conducted herein, although extrusion may substitute for it. Any conventional press may be employed in the molding process that will preferably be carried out within a range of temperatures from about 160 °C to 200 °C. A proper quantity of any pigment or synthetic colorant of a desired hue may be added to the mixture so as to provide cabinets that need not be colored later. If a woody powder of cypress is used as the cellulose powder and a mixture thereof is molded at a temperature controlled as noted above, then resultant products will remain fragrant for a long time. Any synthetic perfumery may alternatively be used in pretreatment of cellulose powder to be controlled as to its aroma.

By virtue of such surface-treated particles of the cellulose powder, it has a significantly increased affinity for the resin molecules contained in the mixture. This feature enables the cellulose powder to mix freely in any remarkably high proportion, raising rigidity of the products. Frequently, a bending stress and strain may be observed in the cabinet walls vibrating. However, a high internal loss (i.e., tan δ) of said the cellulose powder and the intrinsic internal loss of the resin will be summed up to raise the overall internal loss of such highly rigid walls. Speakers installed in such cabinets of the invention will never cause any noticeable resonance in the cabinet walls. Even if any intensive signal pulses do force these cabinet walls to vibrate at extremely high amplitude, their sharp vibration will be attenuated and damped soon not to impair the quality of regenerated sounds to any considerable degree.

Additionally, excellent fluidity of the mixture is afforded herein as noted above, by virtue of improved affinity of the cellulose powder and resin molecules for each other. Owing to this feature, any conventional type of injection molding machines can be used free from any surplus in equipment investment and any change in the molding conditions. Higher ratios in content of cellulose powder will neither adversely affect fluidity nor manufacture efficiency. In contrast with a case of using some inorganic harder filling agents, the molding machine will be protected well from early damage or wear and tear of its molds, cylinders and screws, in favor of inexpensive maintenance.

Further, the mixed materials forming the boxes in products of the invention can be recycled. Possible incineration of them will scarcely give rise to the problem of environment pollution, since the non-chlorinated resins does not produce any noticeable amount of toxic gases or harmful ashes.

### BRIEF DESCRIPTION OF THE DRAWINGS

Fig. 1 is a perspective view of a speaker cabinet provided in a first embodiment of the present invention;
Figs. 2(a), 2(b) and 2(c) are graphs of transient overshoot in vibration observed in some speaker cabinets including one that is shown in Fig. 1;
Fig. 3 also is a graph of the relationship between temperatures and data of Young's modulus that were measured on the cabinet walls shown in Fig. 1; and
Fig. 4 is another graph of the relationship between temperatures and values of tan δ that were measured on the cabinet walls shown in Fig. 1.

### BEST MODES OF CARRYING OUT THE INVENTION

Now, reference is made to Fig. 1 that is a perspective view of a speaker cabinet 1 of a first embodiment. This cabinet 1 box-shaped as usual consists of a cabinet body 11 and a frontal lid 12. Both the body and lid are bolted with self-tapping screws to a core not shown, so as to provide a closed box. A hole 13 formed in the frontal lid 12 is for fixture of a speaker. Although not shown, input terminals for receiving signal currents are disposed in the rear face of this cabinet. Leads 14 for connection to the speaker have inner ends previously attached to the input terminals. Reinforcement ribs 15 are formed on and integral with the inner face of the present cabinet.

The speaker cabinet of the embodiment is made from a mixture commposed of (1) 49.5 % by weight of a polypropylene resin as the non-chlorinated synthetic resin, (2) 50 % by weight of a modified woody powder as the cellulose powder, and (3) 0.5 % by weight of benzoyl peroxide as the organic peroxide. The modified woody powder has been surface-esterified due to reaction of 10 parts by weight of maleic anhydride with 100 parts by weight of raw woody powder having an average particle size of 100 µm. This mixture is molded into a speaker shown in Fig. 1, at a target temperature within a range of from about 160 °C to 200 °C. The speaker cabinet has a dimension of 170 *mm*×170 *mm*×120 *mm,* respectively for its height, width and depth. Thickness and density of cabinet walls are 4 *mm* and 1.10 gr/cc, respectively.

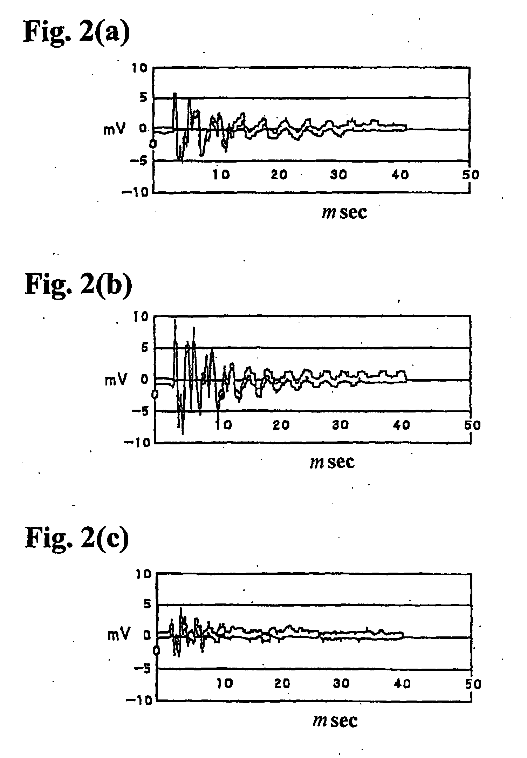

A speaker having a diameter of 12 *cm* and installed in an example of the cabinet of the invention was driven with current signals, and transient excessive vibration of its walls was inspected and analyzed to give a result shown in Fig. 2(a). Fig. 2(b) shows one corresponding date that was obtained in another cabinet, which had been prepared as a reference or control made of a polypropylene (wall thickness and density being 4 *mm* and 0.9 gr/cc, respectively). Fig. 2(c) likewise shows the other corresponding date that was obtained in still another cabinet as another reference made of a middle density woody fiber board (i.e., MDF board) whose wall thickness and density were 9 *mm* and 0.69 gr/cc, respectively. The ordinate in each graph of transient excessive vibration of the cabinet walls does indicate the output voltage from a vibration pickup or vibration sensor. Voltage peak appearing in Fig. 2(a) in the invention was about 0.67 times (- 3.4 dB) as strong as that appearing in Fig. 2(b) given herein as a reference case. Such a difference in intensity of the voltage representing the cabinet wall vibration can be detected well by human ears as such decreased distortion in regenerated sounds.

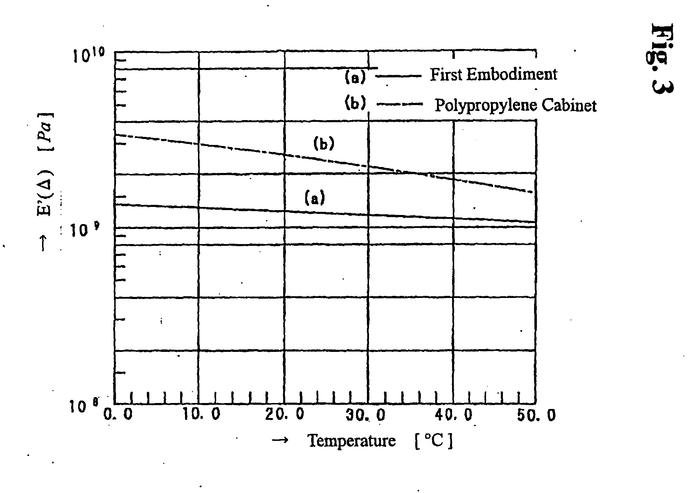

In Fig. 3, the solid curve (a) represents Young's modulus E' as a function of temperature, for the speaker cabinet of the embodiment. The dash-and-dot curve (b) represents the corresponding data found in the reference cabinet made of polypropylene. Temperature was varied within a range of 0 °C to 50 °C, taking into account the condition under which the speakers will operate.

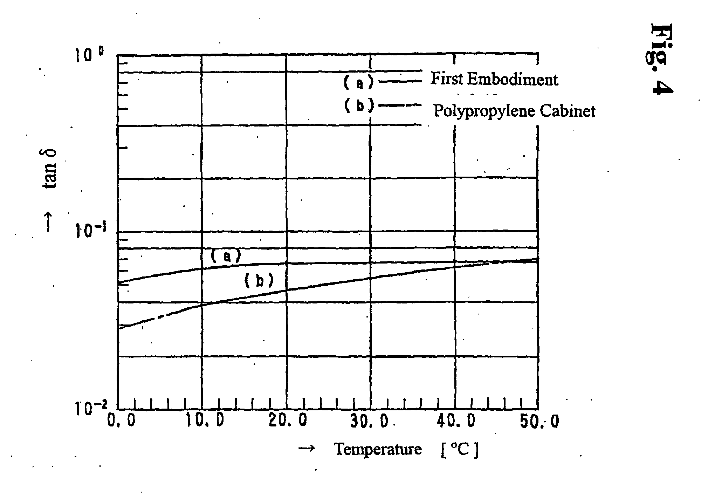

In Fig. 4, the solid and dash-and-dot curves (a) and (b) represent the data of tan δ as a function of temperature, respectively for the cabinet of the embodiment and for the reference cabinet of polypropylene. It will now be apparent that any change in ambient temperature within the range noted above does scarcely affect the modulus of, or internal loss of mechanical energy in, the material of cabinet of the invention. Its vibration will never show any significant change that would adversely affect the quality of regenerated sounds from season to season.

The above embodiments do not delimit the scope of invention but may be modified for example by changing the materials of speaker cabinet to any equivalent ones, by changing the molding apparatus as to its heating means or the like, insofar as the structural features, the objects and advantages of the present invention are ensured or achieved.

### UTILIZABILITY IN THE INDUSTRIES

The present speaker cabinet is composed of a mixture comprising a cellulose powder and a synthetic resin such that the surface layers of powder particles are esterified to increase affinity for the resin. A relatively high content of this powder in the mixture raises rigidity of and increases internal loss in the cabinet walls. Speakers installed in such cabinets will scarcely cause resonance, and even if intensive signal pulses cause vibration of cabinet walls, it will be attenuated soon not to impair quality of regenerated sounds. Good fluidity of the mixture results from improved affinity of the cellulose powder for the resin. Any conventional injection machine is usable without changing the molding conditions but suppressing equipment investment. Higher ratios of cellulose powder will not affect fluidity of the mixture or manufacture efficiency. Due to non-use of inorganic filling agents, the molding machine is now protected from early damage of its molds, cylinders and screws, lowering maintenance cost. Although the mixed materials can be recycled, incineration of them will not cause environmental pollution, since the non-chlorinated resins do not produce any noticeable amount of toxic gases or ashes. The present speaker cabinet is thus highly advantageous from many points of view.

## Claims

1. A speaker cabinet composed of a mixture of a non-chlorinated resin and a cellulose powder, wherein the powder consists of particles whose diameters are included in a range from about 5 µ*m* to 500 µ*m*.

2. A speaker cabinet as defined in claim 1, wherein content by weight of the cellulose powder in the mixture is from about 30 % to 70 %.

3. A speaker cabinet as defined in claim 1 or 2, wherein the resin is selected from the group consisting of polyolefin resins, polyester resins and polystyrene resins.

4. A speaker cabinet as defined in claim 1, 2 or 3, wherein the cellulose powder is surface-treated to increase affinity for the non-chlorinated resin.

5. A speaker cabinet as defined in any one of the preceding claims 1 to 4, wherein the mixture is colored with a colorant.

6. A speaker cabinet as defined in claim 1, 2 or 4, wherein the cellulose powder has an intrinsic perfume, and the mixture is molded at a temperature within a range from 160 °C to 200 °C.

7. A speaker cabinet as defined in any one of the preceding claims 1 to 6, wherein the cellulose powder is surface-esterified using a polybasic acid anhydride so as to increase affinity for the non-chlorinated resin.

8. A speaker cabinet as defined in any one of the preceding claims 1 to 7, the mixture of the non-chlorinated resin and a esterified cellulose powder further comprises an organic peroxide.
